# EUROPEAN PATENT APPLICATION

(11) **EP 0 771 862 A1**
(43) Date of publication of application: **07.05.1997**
(21) Application number: 96307708.6
(22) Date of filing: 24.10.1996
(51) Int. Cl.: C09J 183/10, C09J 183/07, C08G 77/44

(54) **Silicone containing pressure sensitive adhesives**

(30) Priority: 24.10.1995 JP 298919/95
(71) Applicant: Dow Corning Toray Silicone Company Ltd., Ichihara-shi, Chiba Prefecture (JP)
(72) Inventor: Enami, Hiroji, Dow Corning Toray Sil. Co., Ltd., Ichihara-shi, Chiba Prefecture (JP); Hamada, Yuji, Dow Corning Toray Sil. Co., Ltd., Ichihara-shi, Chiba Prefecture (JP); Saiki, Takeaki, Dow Corning Toray Sil. Co., Ltd., Ichihara-shi, Chiba Prefecture (JP)
(74) Representative: Lewin, John Harvey

(57) **Abstract**

An organopolysiloxane for silicone-type pressure-sensitive adhesives is produced by the partial condensation of (a) a crude rubber-like diorganopolysiloxane, which has 10-80 mole% of the molecular chain terminals made of alkenyl groups, and the remainder of the molecular chain terminals made of hydroxyl groups bonded with silicon atoms, and (b) a hydroxylated organopolysiloxane, which contains at least 1 hydroxyl group or alkoxy group bonded with silicon atoms on average in each molecule, and which is represented by the following formula:

(R¹ ₃SiO_{1/2})ₓ(SiO_{4/2})_{1.0} ,

where R¹ represents a substituted or unsubstituted monovalent hydrocarbon group, x is a number of 0.5-1.0 by means of (c) an amine compound which has a boiling point under ambient pressure in the range of -10°C to 200°C. A silicone-type pressure-sensitive adhesive is characterized by having the following ingredients: (A) an organopolysiloxane for silicone-type pressure-sensitive adhesives as disclosed above; (B) a second organopolysiloxane, which contains 2 or more hydrogen atoms bonded with silicon atoms on average in each molecule; and (C) a platinum catalyst.

## Description

This invention pertains to a type of organopolysiloxane for silicone-type pressure-sensitive adhesive, and a silicone-type pressure-sensitive adhesive. More specifically, this invention pertains to a silicone-type pressure-sensitive adhesive, which can be cured by an addition reaction, and can adhere well on silicone rubber. This invention also pertains to a type of organopolysiloxane for manufacturing the aforementioned silicone-type pressure-sensitive adhesive.

The silicone-type pressure-sensitive adhesives have excellent electric insulating properties, cold resistance, adhesion, and other characteristics. The silicone-type pressure-sensitive adhesives can be classified according to their curing mechanisms according to addition reaction curing type, condensation reaction type, and peroxide curing type. Among them, the addition reaction type, silicone-type pressure-sensitive adhesive is preferred as it can be cured rapidly at room temperature or by heating. Examples of the existing silicone-type pressure-sensitive adhesives of the addition reaction type are as follows: a silicone-type pressure-sensitive adhesive made of organopolysiloxane consisting of monofunctional siloxane units and tetrafunctional siloxane units, a diorganopolysiloxane having two terminals of its molecular chain blocked by vinyl groups, organopolysiloxane containing on average 2 or more hydrogen atoms bonded with silicon atoms in each molecule, and a platinum-type catalyst (see Japanese Kokoku Patent No. Sho 54[1979]-37907); a silicone-type pressure-sensitive adhesive made of organopolysiloxane prepared by partial condensation of a diorganopolysiloxane with two terminals of its molecular chain blocked by hydroxyl groups bonded with silicon atoms, and an organopolysiloxane made of monofunctional siloxane units and tetrafunctional siloxane units, an organopolysiloxane containing hydrogen atoms bonded with silicon atoms, and a platinum-type catalyst (see Japanese Kokoku Patent No. Hei 5[1993]-34391); and a silicone-type pressure-sensitive adhesive made of a diorganopolysiloxane having the two terminals of its molecular chain blocked by alkenyl groups, an organopolysiloxane made of monofunctional siloxane units and tetrafunctional siloxane units, an organopolysiloxane containing on average 2 or more hydrogen atoms bonded with silicon atoms in each molecule, a platinum-type catalyst, and an organic solvent (see Japanese Kokai Patent Application No. Sho 63[1988]-22886).

In particular, by containing an organopolysiloxane prepared by partial condensation of a diorganopolysiloxane with the two terminals of its molecular chain blocked by hydroxyl groups bonded with silicon atoms, and an organopolysiloxane made of monofunctional siloxane units and tetrafunctional siloxane units, it is possible to realize a stable adhesion for the silicone-type pressure-sensitive adhesive. Several methods have been adopted for performing partial condensation of the diorganopolysiloxane with the two terminals of its molecular chain blocked by hydroxyl groups bonded with silicon atoms and the organopolysiloxane made of monofunctional siloxane units and tetrafunctional siloxane units, such as the method of partial condensation by heating at a high temperature, and the method of partial condensation by means of ammonia (see Japanese Kokoku Patent No. Hei 6[1994]-94553).

However, for the addition reaction curing of silicone-type pressure-sensitive adhesive prepared by adding the organopolysiloxane prepared in the above, the adhesion with respect to silicone rubber is insufficient. This is a disadvantage.

The present inventors have performed extensive research on the aforementioned topics. As a result, this invention was reached.

The purpose of this invention is to provide a silicone-type pressure-sensitive adhesive, which can be cured by an addition reaction, and can adhere well on silicone rubber, and to provide a type of organopolysiloxane for manufacturing the aforementioned silicone-type pressure-sensitive adhesive.

The organopolysiloxane for the silicone-type pressure-sensitive adhesive of this invention is characterized by the fact that the organopolysiloxane is prepared by partial condensation of (a) and (b), wherein (a) is a plurality of diorganopolysiloxane molecules having molecular chain terminal groups, wherein 10-80 mole percent of said molecular chain terminal groups are alkenyl groups and the remaining molecular chain terminal groups are hydroxyl groups bonded to silicone atoms, and (b) is a hydroxylated organopolysiloxane, which contains 1 or more hydroxyl groups or alkoxy groups bonded with silicon atoms on average in each molecule, and which comprises units having the formula:

(R¹ ₃SiO_{1/2})ₓ(SiO_{4/2})_{1.0}

where R¹ represents a substituted or unsubstituted monovalent hydrocarbon group, and x is a number from 0.5-1.0, and wherein said reaction between (a) and (b) is promoted by (c), an amine compound which has a boiling point under ambient pressure in the range of - 10°C to 200°C.

The silicone-type pressure-sensitive adhesive of this invention is characterized by the fact that it has the following ingredients:
(A) the aforementioned first organopolysiloxane for silicone-type pressure-sensitive adhesive;
(B) a second organopolysiloxane, which contains 2 or more hydrogen atoms bonded with silicon atoms on average in each molecule (in an amount appropriate to feed 0.7 mol or more hydrogen atoms bonded with silicon atoms with respect to 1 mol of the alkoxy groups in ingredient (A)); and
(C) a platinum-type catalyst.

First of all, the first organopolysiloxane for silicone-type pressure-sensitive adhesive of this invention will be explained in detail.

Ingredient (a) is a gum-like diorganopolysiloxane, which has 10-80 mol% of the molecular chain terminal groups made of alkenyl groups, and the remainder made of hydroxyl groups bonded with silicon atoms. If the diorganopolysiloxane used contains less than 10 mol% of the molecular chain terminal groups made of alkenyl groups, and the remainder made of hydroxyl groups bonded with silicon atoms, partial condensation among the diorganopolysiloxane molecules may take place, and it is impossible to form a silicone-type pressure-sensitive adhesive with good adhesion on the silicone rubber. On the other hand, when the diorganopolysiloxane used contains less than 20 mol% of the molecular chain terminal groups made of hydroxyl groups bonded with silicon atoms and the reminder made of alkenyl groups, it becomes hard to perform the partial condensation with ingredient (b). Ingredient (a) is substantially in straight chain shape. However, it is also possible to have a portion of its molecular chain branched. Examples of the groups that can be bonded with the side chains of the molecular chain in ingredient (a) including groups such as a methyl group, ethyl group, propyl group, butyl group, pentyl group, heptyl group, and other alkyl groups; vinyl group, allyl group, butenyl group, pentenyl group, and other alkenyl groups; phenyl group, tolyl group, xylyl group, and other aryl groups; benzyl group, phenethyl group, and other aralkyl groups; chloromethyl group, 3-chloropropyl group, 3,3,3-trifluoropropyl group, and other halogenated alkyl groups, and other monovalent hydrocarbon groups. In particular, methyl groups, vinyl groups, and phenyl groups are preferred. Ingredient (a) should be in crude rubber form. In particular, it is preferably in the form of crude rubber with plasticity in the range of 100-160 (William plasticity measured using the method defined in JIS K 6300, after setting at 25°C for 3 min).

Ingredient (b) is a hydroxylated organopolysiloxane, which contains on average 1 or more hydroxyl groups or alkoxy groups bonded with silicon atoms in each molecule and is represented by the following mean formula:

(R¹ ₃SiO_{1/2})ₓ(SiO_{4/2})_{1.0}

In the aforementioned formula, R¹ represents substituted or unsubstituted monovalent hydrocarbon group, include groups such as a methyl group, ethyl group, propyl group, butyl group, pentyl group, heptyl group, and other alkyl groups; vinyl group, allyl group, butenyl group, pentenyl group, and other alkenyl groups; phenyl group, tolyl group, xylyl group, and other aryl groups; benzyl group, phenethyl group, and other aralkyl groups; chloromethyl group, 3-chloropropyl group, 3,3,3-trifluoropropyl group, and other halogenated alkyl groups, and other monovalent hydrocarbon groups. In ingredient (b), there are on average 1 or more hydroxyl groups or alkoxy groups bonded with silicon atoms. This is for partial condensation with ingredient (a). In ingredient (b), it is preferred that the content of the hydroxyl groups or alkoxy groups bonded with silicon atoms be 10 wt% or less, or more preferably 5 wt% or less. Examples of the alkoxy groups bonded with silicon atoms in ingredient (b) include a methoxy group, ethoxy group, and propoxy group. Also, in the aforementioned formula, x represents the molar ratio of the monofunctional siloxane units R¹ ₃SiO_{1/2} (that is, (2) units) to the tetrafunctional siloxane units SiO_{4/2} (that is, (3) units). It should be in the range of 0.5-1.0, or preferably in the range of 0.6-0.9. If x is a number smaller than 0.5, the silicone-type pressure-sensitive adhesive containing organopolysiloxane has poor adhesion. On the other hand, when it is larger than 1.0, the silicone-type pressure-sensitive adhesive containing organopolysiloxane has poor coagulating power.

When partial condensation of ingredient (a) and ingredient (b) is performed, the ratio by weight of ingredient (a) to ingredient (b) is preferably in the range of 2:8 to 8:2, or more preferably in the range of 3:7 to 7:3.

The amine compound as ingredient (c) is a condensation reaction catalyst for performing partial condensation of said ingredient (a) and said ingredient (b). The boiling point under ambient pressure should be in the range of -10°C to 200°C, or preferably in the range of -10°C to 150°C, or more preferably in the range of 30°C to 100°C. When an amine compound with boiling point under ambient pressure lower than -10°C is used as the condensation reaction catalyst, it is hard to perform the partial condensation of ingredient (a) and ingredient (b). On the other hand, when an amine compound with the aforementioned boiling point over 200°C is used, the silicone-type pressure-sensitive adhesive containing the obtained organopolysiloxane has poor coagulating power. Examples of the compounds that can be used as ingredient (c) include methylamine (bp = -9.7°C), ethylamine (bp = 16.6°C), n-propylamine (bp - 49°C), i-propylamine (bp = 32°C), n-butylamine (bp = 78°C), amylamine (bp = 104°C), n-heptylamine (bp = 155°C), and other aliphatic primary amine compounds; dimethylamine (bp = 7.4°C), diethylamine (bp = 55.5°C), di-n-propylamine (bp = 110°C), di-i-propylamine (bp = 84°C), di-n-butylamine (bp = 159°C), and other aliphatic secondary amine compounds; trimethylamine (bp = 3.2-3.8°C), triethylamine (bp = 89.4°C), tri-n-propylamine (bp = 156.5°C), and other aliphatic tertiary amine compounds; allylamine (bp = 58°C), and other aliphatic unsaturated amine compounds; cyclopropylamine (bp = 50°C), cyclobutylamine (bp = 82°C), cyclopentylamine (bp = 107-108°C) , cyclohexylamine (bp = 134°C), and other alicyclic amine compounds; aniline (bp - 184°C), methylaniline (bp = 196.1°C), dimethylaniline (bp = 193°C), benzylamine (bp = 185°C), etc.

The amount of ingredient (c) with respect to 100 parts by weight of the sum of the amounts of ingredient (a) and ingredient (b) is preferably in the range of 0.001-10 parts by weight, or more preferably in the range of 0.01-1 part by weight.

The organopolysiloxane for silicone-type pressure-sensitive adhesive of this invention is usually manufactured as follows: first of all, ingredient (a) and ingredient (b) are mixed homogeneously in an organic solvent as needed. Then, ingredient (c) is added into the mixture for partial condensation. There is no special limitation on the amount of the organic solvent used in this case, as long as the partial condensation of ingredient (a) and ingredient (b) can be performed swiftly. The organic solvent should be compatible with ingredient (a) and ingredient (b), and it should not hamper the partial condensation of ingredient (a) and ingredient (b). Examples of the solvents that can be used include toluene, xylene, and other aromatic solvents; hexane, heptane, and other aliphatic solvents; acetone, methyl ethyl ketone, methyl isobutyl ketone, and other ketone-type solvents. Among them, in particular, toluene, xylene and other aromatic solvents are preferred. The partial condensation may be carried out at room temperature. However, in order to perform the partial condensation quickly, it is preferred that the reaction system be heated to a degree that ingredient (c) is not evaporated. More specifically, it is preferred that this system be heated at 50-70°C. The progress in the partial condensation can be identified by decrease in the hydroxyl groups or alkoxy groups bonded with silicon atoms, by means of IR spectral analysis and 29Si nuclear magnetic resonance spectral analysis of the reaction problem extracted from the system. Also, progress in the partial condensation may be identified by thickening of the system. After partial condensation of ingredient (a) and ingredient (b), it is preferred that this system be heated so that ingredient (c) is distilled off. In order to distill off ingredient (c) from this system, this system may be heated to a temperature higher than the boiling point of ingredient (c), or this system may be evacuated, or nitrogen gas, helium gas, argon gas, or other inert gas may be fed to pass through the system and ingredient (c) is distilled off together with the inert gas.

The organopolysiloxane for silicone-type pressure-sensitive adhesive of this invention is prepared by partial condensation of said ingredient (a) and ingredient (b). However, the organopolysiloxane may also contain unreacted ingredient (a) and ingredient (b). Also, the organopolysiloxane may contain an organic solvent used for the partial condensation.

In the following, the silicone-type pressure-sensitive adhesive of this invention will be explained in detail.

Ingredient (A) is the principal ingredient of this composition. As explained in the above, it is the first organopolysiloxane for silicone-type pressure-sensitive adhesive prepared by partial condensation of ingredient (a) and ingredient (b) by means of ingredient (c). It is also possible to make use of ingredient (A) as the organic solvent for preparing it.

Ingredient (B) is the cross-linking agent in this composition. It is the second organopolysiloxane containing on average 2 or more hydrogen atoms bonded with silicon atoms in each molecule. The bonding site of the hydrogen atoms bonded with silicon atoms in ingredient (B) may be the terminals of the molecular chain and/or side chains of the molecular chain. Examples of the groups bonded with silicon atoms in ingredient (B) include methyl group, ethyl group, propyl group, butyl group, pentyl group, hexyl group, heptyl group, and other alkyl groups; phenyl group, tolyl group, xylyl group, naphthyl group, and other aryl groups; benzyl group, phenethyl group, and other aralkyl groups; chloromethyl group, 3-chloropropyl group, 3,3,3-trichloropropyl group, and other halogenated alkyl groups, and other monovalent hydrocarbon groups. Among them, methyl group and phenyl group are preferred. Examples of the molecular configurations of ingredient (B) include straight chain type, branched type, cyclic type, and straight chain type having a portion of branches. In particular, the straight chain type is preferred. The viscosity of ingredient (B) at 25°C is preferably in the range of 1-500,000 cP, or more preferably in the range of 5-100,000 cP.

Examples of the second organopolysiloxanes of ingredient (B) include methylhydrodiene polysiloxane with two terminals of the molecular chain blocked by trimethylsiloxy groups, dimethylsiloxane-methylhydrodiene siloxane copolymer with two terminals of the molecular chain blocked by trimethylsiloxy groups, dimethylsiloxane-methylhydrodiene siloxane-methylphenylsiloxane copolymer with two terminals of the molecular chain blocked by trimethylsiloxy groups, dimethylpolysiloxane with two terminals of the molecular chain blocked by dimethylhydrodiene siloxy groups, dimethylsiloxane-methylphenylsiloxane copolymer with two terminals of the molecular chain blocked by dimethylhydrodiene siloxy groups, methylphenylpolysiloxane with two terminals of the molecular chain blocked by dimethylhydrodiene siloxy groups, organopolysiloxane copolymer made of siloxane units represented by formula R² ₃SiO_{1/2'}, siloxane units represented by formula (2) R² ₂HSiO_{1/2}, and siloxane units represented by (3) SiO_{4/2} organopolysiloxane copolymer made of siloxane units represented by formula (4) R² ₂HSiO_{1/2} and siloxane units represented by formula (5) SiO_{4/2} and organopolysiloxane copolymer made of siloxane units represented by formula (6) R²HSiO_{2/2} and siloxane units represented by formula (7) R²SiO_{3/2} or siloxane units represented by (8) HSiO_{3/2}.

These types of organopolysiloxanes may be used either alone or as a mixture of several types. In the aforementioned formulas, R² represents monovalent hydrocarbon groups other than alkenyl groups, such as methyl group, ethyl group, propyl group, butyl group, pentyl group, hexyl group, heptyl group and other alkyl groups; phenyl group, tolyl group, xylyl group, and other aryl groups; benzyl group, phenethyl group, and other aralkyl groups; chloromethyl group, 3-chloropropyl group, 3,3,3-trifluoropropyl group, and other halogenated alkyl groups.

The amount of ingredient (B) should be appropriate to correspond to 0.7 mol or more of hydrogen atoms bonded with silicon atoms with respect to 1 mol of the alkenyl groups in ingredient (A). In the practical application, the upper limit is preferably 100. This is because, if the amount of the hydrogen atoms bonded with silicon atoms in ingredient (B) with respect to 1 mol of alkenyl groups in ingredient (A) is smaller than 0.7 mol, the obtained silicone-type pressure-sensitive adhesive cannot be well cured.

The platinum-type catalyst as ingredient (C) is a catalyst for curing the composition by promoting the addition reaction between alkenyl groups in ingredient (A) and hydrogen atoms bonded with silicon atoms in ingredient (B). Examples of ingredient (C) include fine powder of platinum, platinum black, platinum-carrying fine silica powder, platinum-carrying active carbon, chloroplatinic acid, platinum tetrachloride, alcohol solution of chloroplatinic acid, complex of platinum and olefin, complex of platinum and divinyltetramethyldisiloxane or other alkenylsiloxane.

The amount of ingredient (C) should be appropriate to correspond to the platinum metal amount in ingredient (C) in the range of 0.1-1000 ppm, or preferably 1-500 ppm, with respect to the amount of the first and second organopolysiloxane ingredients in the composition. If the amount of the platinum metal in ingredient (C) with respect to the first and second organopolysiloxane ingredients in the composition is less than 0.1 ppm, the silicone-type pressure-sensitive adhesive formed cures very slowly. On the other hand, when the aforementioned amount is over 1000 ppm, the silicone-type pressure-sensitive adhesive formed is colored.

The silicone-type pressure-sensitive adhesive of this invention is made of said ingredients (A)-(C). Also, it may contain any of the following ingredients: toluene, xylene, hexane, heptane, acetone, methyl ethyl ketone, methyl isobutyl ketone, and other organic solvents; tetramethoxysilane, tetraethoxysilane, dimethyldimethoxysilane, methylphenyldimethoxysilane, methylphenyldiethoxysilane, phenyltrimethoxysilane, methyltrimethoxysilane, methyltriethoxysilane, vinyltrimethoxysilane, allyltrimethoxyeilane, allyltriethoxysilane, 3-glycidoxypropyltrimethoxysilane, 3-methacryloxypropyltrimethoxysilane, and other alkoxysilane compounds; 3-methyl-1-butyl-3-ol, 3,5-dimethyl-1-hexyl-3-ol, 3-methyl-1-penten-3-ol, 3-phenyl-1-butyn-3-ol, and other alkyl alcohols; 3-methyl-3-pentene-1-yne, 3,5-dimethyl-3-hexene-1-yne, and other ene-yne compounds; 1,3,5,7-tetramethyl-1,3,5,7-tetravinylcyclotetrasiloxane, 1,3,5,7-tetramethyl-1,3,5,7-tetrahexenylcyclotetrasiloxane, benzotriazole, and other curing inhibitors; fumed silica, precipitated silica, titanium dioxide, carbon black, alumina, quartz powder, and other inorganic fillers, as well as fillers prepared by surface treatment for these inorganic fillers by organoalkoxysilane, organochlorosilane, organosilane, and other organic silicon compounds; oxidation inhibitors; pigments; stabilizers; etc.

The aforementioned silicone-type pressure-sensitive adhesive is coated on release paper. After it is cured, it is pressed on a substrate to form an adhesive material. Also, it is possible to prepare the adhesive material by coating the silicone-type pressure-sensitive adhesive on a substrate, followed by curing. Examples of the materials that can be used as the substrate include films of polyethylene terephthalate resin or other polyester resins, films of polyimide resin, and other plastic films; Japanese paper, synthetic paper, and other paper sheets; cloths; glass wool; metal foils; etc. The release paper may be plastic films and paper sheets with both sides or one side subject to releasing treatment. The shapes that can be adopted include tape, film, and sheet.

### Examples

The organopolysiloxane for silicone-type pressure-sensitive adhesive of this invention and the silicone-type pressure-sensitive adhesive of this invention will be explained in detail with reference to application examples in the following. In the application examples, the viscosity refers to the value measured at 25°C. The characteristics of the silicone-type pressure-sensitive adhesive were measured as follows.

### Adhesion

After a layer of silicone-type pressure-sensitive adhesive with thickness of about 30 mm was coated on a substrate made of polyethylene terephthalate resin, it was heated at 100°C for 3 min to form an adhesive sheet. Then, the adhesive sheet was cut to form adhesive tape with width of 2.5 cm. The adhesive tape was pressed by a 2-kf rubber roller on a substrate made of a stainless steel sheet (SUS304) processed by grinding by No. 280 water-resistant grinding paper. Then, after setting still at room temperature for 30 min, 180c peeling was performed to measure the adhesion using a tensile tester at a constant speed (300 mm/min).

Also, testing was performed and adhesion was measured in the same way as in the above, except that a silicone rubber sheet was used.

### Tack (ball-rolling method)

After a layer of silicone-type pressure-sensitive adhesive with thickness of about 30 mm was coated on a substrate made of polyethylene terephthalate resin, it was heated at 100°C for 3 min to form an adhesive sheet. For the obtained adhesive tape, measurement was performed for the tack according to the test method defined in JIS Z 0237. That is, with adhesive side upward, the adhesive tape was installed on a slope plate at an angle of 30°. A running path with a length of 100 mm was arranged on the upper end of the slope, and the steel ball was made to roll on the running path. The ball No. of the steel ball that can stop at the position of 100 mm on the adhesive surface was derived.

### Peeling resistance

After a layer of silicone-type pressure-sensitive adhesive with thickness of about 30 mm was coated on a substrate made of polyethylene terephthalate resin with its surface processed by fluorosilicone resin, it was heated at 100°C for 3 min to form an adhesive sheet. Then, a polyethylene terephthalate resin film was bonded on the adhesive surface, and, under a load of 20 gf[sic]/cm², the sample was set at room temperature for 30 min. It was then cut to adhesive tape with width of 2.5 cm. For the obtained adhesive tape, the peeling resistance was measured using 1800 peeling method on a tensile tester at a constant speed of 300 mm/min.

Also, the adhesive tape was pressed by a 2-kf rubber roller on a substrate made of a stainless steel sheet (SUS304) processed by grinding by No. 280 water-resistant grinding paper. Then, after setting still at room temperature for 30 min, 1800 peeling was performed to measure the adhesion using a tensile tester at a constant speed (300 mm/min).

### Application Example 1

27 parts by weight of crude rubber-like dimethylpolysiloxane (with vinyl group content of 0.004 wt%), which contains vinyl groups as 20 mol% of the molecular chain terminal groups, has the remainder made of hydroxyl groups bonded with silicon atoms, and has a plasticity of 142, and 35 parts by weight of organopolysiloxane (containing 2.0 wt% of hydroxyl groups bonded with silicon atoms) represented by mean formula:

[(CH₃)₃SiO_{1/2}]_{0.7}(SiO_{4/2})_{1.0}

were homogeneously dispersed in 40 parts by weight of xylene. Then, 0.3 part by weight of n-butylamine (bp = 78°C) was added into this system. While the system was heated at 70°C, the mixture was stirred for 1 h. After the partial condensation was confirmed, nitrogen gas was fed to flow through this system, and heating and stirring were performed at 140°C for 2 h to distill off n-butylamine. Then, xylene was added into the system, and a xylene solution of organopolysiloxane for silicone-type pressure-sensitive adhesive was prepared with viscosity of 350 P, and with a proportion of organopolysiloxane ingredient of 60 wt%.

Then, 0.2 part by weight of methylhydrodiene polysiloxane (with the content of the hydrogen atoms bonded with silicon atoms of 1.56 wt%) with the two terminals of the molecular chain blocked by trimethylsiloxy groups and having viscosity of 20 cP, 0.2 part by weight of 3-methyl-1-butyl-3-ol, and 50 parts by weight of toluene were blended with 100 parts by weight of the xylene solution of organopolysiloxane for silicone-type pressure-sensitive adhesive. Then, a complex of platinum and 1,3-divinyl-1,1,3,3-tetramethyldisiloxane in an amount corresponding to 100 ppm by weight of the platinum metal in the complex with respect to the organopolysiloxane ingredient was added, preparing silicone-type pressure-sensitive adhesive with the proportion of organopolysiloxane of 40 wt%.

The characteristics of the silicone-type pressure-sensitive adhesive were measured using the aforementioned methods, with results listed in Table I.

### Application Example 2

27 parts by weight of crude rubber-like dimethylpolysiloxane (with vinyl group content of 0.005 wt%), which contains vinyl groups as 25 mol% of the molecular chain terminal groups, has the remainder made of hydroxyl groups bonded with silicon atoms, and has a plasticity of 140, and 35 parts by weight of organopolysiloxane (containing 2.0 wt% of hydroxyl groups bonded with silicon atoms) represented by mean formula:

[(CH₃)₃SiO_{1/2}]_{0.8}(SiO_{4/2})_{1.0}

were homogeneously dispersed in 40 parts by weight of xylene. Then, 0.3 part by weight of triethylamine (bp = 89.4°C) was added into this system. While the system was heated at 70°C, the mixture was stirred for 1 h. After the partial condensation was confirmed, nitrogen gas was fed to flow through this system, and heating and stirring were performed at 140°C for 2 h to distill off triethylamine. Then, xylene was added into the system, and a xylene solution of organopolysiloxane for silicone-type pressure-sensitive adhesive was prepared with viscosity of 780 P, and with proportion of organopolysiloxane ingredient of 60 wt%.

Then, 0.2 part by weight of methylhydrodiene polysiloxane (with content of the hydrogen atoms bonded with silicon atoms of 1.56 wt%) with the two terminals of the molecular chain blocked by trimethylsiloxy groups and having viscosity of 20 cP, 0.2 part by weight of 3-methyl-1-butyl-3-ol, and 50 parts by weight of toluene were blended with 100 parts by weight of the xylene solution of organopolysiloxane for silicone-type pressure-sensitive adhesive. Then, a complex of platinum and 1,3-divinyl 1,3,3-tetramethyldisiloxane in an amount corresponding to 150 ppm by weight of the platinum metal in the complex with respect to the organopolysiloxane ingredient was added, preparing silicone-type pressure-sensitive adhesive with proportion of organopolysiloxane of 40 wt%.

The characteristics of the silicone-type pressure-sensitive adhesive were measured using the aforementioned methods, with results listed in Table I.

### Application Example 3

27 parts by weight of crude rubber-like dimethylpolysiloxane (with vinyl group content of 0.01 wt%), which contains vinyl groups as 60 mol% of the molecular chain terminal groups, has the remainder made of hydroxyl groups bonded with silicon atoms, and has a plasticity of 138, and 35 parts by weight of organopolysiloxane (containing 2.0 wt% of hydroxyl groups bonded with silicon atoms) represented by mean formula:

[(CH₃)₃SiO_{1/2}]_{0.7}(SiO_{4/2})_{1.0}

were homogeneously dispersed in 40 parts by weight of xylene. Then, 0.3 part by weight of n-propylamine (bp = 49°C) was added into this system. While the system was heated at 70°C, the mixture was stirred for 1 h. After the partial condensation was confirmed, nitrogen gas was fed to flow through this system, and heating and stirring were performed at 140°C for 2 h to distill off n-propylamine. Then, xylene was added into the system, and a xylene solution of organopolysiloxane for silicone-type pressure-sensitive adhesive was prepared with viscosity of 440 P, and with proportion of organopolysiloxane ingredient of 60 wt%.

Then, 0.2 part by weight of methylhydrodiene polysiloxane (with content of the hydrogen atoms bonded with silicon atoms of 1.56 wt%) with the two terminals of the molecular chain blocked by trimethylsiloxy groups and having viscosity of 20 cP, 0.2 part by weight of 3-methyl-1-butyl-3-ol, and 50 parts by weight of toluene were blended with 100 parts by weight of the xylene solution of organopolysiloxane for silicone-type pressure-sensitive adhesive. Then, a complex of platinum and 1,3-divinyl-1,1,3,3-tetramethyldisiloxane in an amount corresponding to _300 ppm by weight of the platinum metal in the complex with respect to the organopolysiloxane ingredient was added, preparing silicone-type pressure-sensitive adhesive with proportion of organopolysiloxane of 40 wt%.

The characteristics of the silicone-type pressure-sensitive adhesive were measured using the aforementioned methods, with results listed in Table I.

### Application Example 4

27 parts by weight of crude rubber-like dimethylsiloxane-methylvinylsiloxane-methylphenylsiloxane copolymer (for the groups of the molecular chain side chains, 96 mol% as methyl groups, 0.5 mol% as vinyl groups, and 3.5 mol% of phenyl groups; with vinyl group content of 0.007 wt%), which contains vinyl groups as 20 mol% of the molecular chain terminal groups, has the remainder made of hydroxyl groups bonded with silicon atoms, and has a plasticity of 154, and 35 parts by weight of organopolysiloxane (containing 2.0 wt% of hydroxyl groups bonded with silicon atoms) represented by mean formula:

[(CH₃)₃SiO_{1/2}]_{0.7}(SiO_{4/2})_{1.0}

were homogeneously dispersed in 40 parts by weight of xylene. Then, 0.3 part by weight of n-butylamine (bp = 78°C) was added into this system. While the system was heated at 70°C, the mixture was stirred for 1 h. After the partial condensation was confirmed, nitrogen gas was fed to flow through this system, and heating and stirring were performed at 140°C for 2 h to distill off n-butylamine. Then, toluene [sic; xylene] was added into the system, and a xylene solution of organopolysiloxane for silicone-type pressure-sensitive adhesive was prepared with viscosity of 350 P, and with proportion of organopolysiloxane ingredient of 60 wt%.

Then, 0.2 part by weight of methylhydrodiene polysiloxane (with content of the hydrogen atoms bonded with silicon atoms of 1.56 wt%) with the two terminals of the molecular chain blocked by trimethylsiloxy groups and having viscosity of 20 cP, 0.2 part by weight of 3-methyl-1-butyl-3-ol, and 50 parts by weight of toluene were blended with 100 parts by weight of the xylene solution of organopolysiloxane for silicone-type pressure-sensitive adhesive. Then, a complex of platinum and 1,3-divinyl-1,1,3,3-tetramethyldisiloxane in an amount corresponding to 100 ppm by weight of the platinum metal in the complex with respect to the organopolysiloxane ingredient was added, preparing silicone-type pressure-sensitive adhesive with proportion of organopolysiloxane of 40 wt%.

The characteristics of the silicone-type pressure-sensitive adhesive were measured using the aforementioned methods, with results listed in Table I.

### Comparative Example 1

27 parts by weight of crude rubber-like dimethylpolysiloxane (with vinyl group content of 0.004 wt%), which contains vinyl groups as 20 mol% of the molecular chain terminal groups, has the remainder made of hydroxyl groups bonded with silicon atoms, and has a plasticity of 142, and 35 parts by weight of organopolysiloxane (containing 2.0 wt% of hydroxyl groups bonded with silicon atoms) represented by mean formula:

[(CH₃)₃SiO_{1/2}]_{0.7}(SiO_{4/2})_{1.0}

were homogeneously dispersed in 40 parts by weight of xylene. Then, 1.2 parts by weight of 29 wt% aqueous solution of ammonia were added into this system. While the system was heated at 70°C, the mixture was stirred for 1 h. After the partial condensation was confirmed, nitrogen gas was fed to flow through this system, and heating and stirring were performed at 140°C for 2 h to dissipate ammonia as vapor. Then, xylene was added into the system, and a xylene solution of organopolysiloxane for silicone-type pressure-sensitive adhesive was prepared with viscosity of 410 P, and with proportion of organopolysiloxane ingredient of 60 wt%.

Then, 0.2 part by weight of methylhydrodiene polysiloxane (with content of the hydrogen atoms bonded with silicon atoms of 1.56 wt%) with the two terminals of the molecular chain blocked by trimethylsiloxy groups and having viscosity of 20 cP, 0.2 part by weight of 3-methyl-1-butyl-3-ol, and 50 parts by weight of toluene were blended with 100 parts by weight of the xylene solution of organopolysiloxane for silicone-type pressure-sensitive adhesive. Then, a complex of platinum and 1,3-divinyl-1,1,3,3-tetramethyldisiloxane in an amount corresponding to 100 ppm by weight of the platinum metal in the complex with respect to the organopolysiloxane ingredient was added, preparing silicone-type pressure-sensitive adhesive with proportion of organopolysiloxane of 40 wt%.

The characteristics of the silicone-type pressure-sensitive adhesive were measured using the aforementioned methods, with results listed in Table I.

### Comparative Example 2

27 parts by weight of crude rubber-like dimethylpolysiloxane (with vinyl group content of 0.004 wt%), which contains vinyl groups as 20 mol% of the molecular chain terminal groups, has the remainder made of hydroxyl groups bonded with silicon atoms, and has a plasticity of 142, and 35 parts by weight of organopolysiloxane (containing 2.0 wt% of hydroxyl groups bonded with silicon atoms) represented by mean formula:

[CH₃)₃SiO_{1/2}]_{0.7}(SiO_{4/2})_{1.0}

were homogeneously dispersed in 40 parts by weight of xylene. While the system was heated at 70°C, the mixture was stirred for 1 h, followed by heating with stirring at 140°C for 2 h. Then, xylene was added into the system, and a xylene solution of organopolysiloxane for silicone-type pressure-sensitive adhesive was prepared with viscosity of 350 P, and with proportion of organopolysiloxane ingredient of 60 wt%.

Then, 0.2 part by weight of methylhydrodiene polysiloxane (with content of the hydrogen atoms bonded with silicon atoms of 1.56 wt%) with the two terminals of the molecular chain blocked by trimethylsiloxy groups and having viscosity of 20 cP, 0.2 part by weight of 3-methyl-1-butyl-3-ol, and 50 parts by weight of toluene were blended with 100 parts by weight of the xylene solution of organopolysiloxane for silicone-type pressure-sensitive adhesive. Then, a complex of platinum and 1,3-divinyl-1,1,3,3-tetramethyldisiloxane in an amount corresponding to 100 ppm by weight of the platinum metal in the complex with respect to the organopolysiloxane ingredient was added, preparing silicone-type pressure-sensitive adhesive with proportion of organopolysiloxane of 40 wt%.

The characteristics of the silicone-type pressure-sensitive adhesive were measured using the aforementioned methods, with results listed in Table I.

### Comparative Example 3

27 parts by weight of crude rubber-like dimethylpolysiloxane (with vinyl group content of 0.004 wt%), which contains vinyl groups as 20 mol% of the molecular chain terminal groups, has the remainder made of hydroxyl groups bonded with silicon atoms, and has a plasticity of 142, and 35 parts by weight of organopolysiloxane (containing 2.0 wt% of hydroxyl groups bonded with silicon atoms) represented by mean formula:

[(CH₃)₃SiO_{1/2}]_{0.7}(SiO_{4/2})_{1.0}

were homogeneously dispersed in 40 parts by weight of xylene. Then, 0.5 part by weight of tributylamine (bp = 216°C) was added into the system. While the system was heated at 70°C, the mixture was stirred for 1 h. After the partial condensation was confirmed, nitrogen gas was fed to flow through this system, and heating and stirring were performed at 140°C for 2 h to distill off tributylamine. Then, xylene was added into the system, and a xylene solution of organopolysiloxane for silicone-type pressure-sensitive adhesive was prepared with viscosity of 420 P, and with proportion of organopolysiloxane ingredient of 60 wt%.

Then, 0.2 part by weight of methylhydrodiene polysiloxane (with content of the hydrogen atoms bonded with silicon atoms of 1.56 wt%) with the two terminals of the molecular chain blocked by trimethylsiloxy groups and having viscosity of 20 cP, 0.2 part by weight of 3-methyl-1-butyl-3-ol, and 50 parts by weight of toluene were blended with 100 parts by weight of the xylene solution of organopolysiloxane for silicone-type pressure-sensitive adhesive. Then, a complex of platinum and 1,3-divinyl-1,1,3,3-tetramethyldisiloxane in an amount corresponding to _100 ppm by weight of the platinum metal in the complex with respect to the organopolysiloxane ingredient was added, preparing silicone-type pressure-sensitive adhesive with proportion of organopolysiloxane of 40 wt%.

The characteristics of the silicone-type pressure-sensitive adhesive were measured using the aforementioned methods, with results listed in Table I.

**Table I**

| | Application Examples | | | | Comparative Examples | | |
|---|---|---|---|---|---|---|---|
| Adhesion (gf/2.5 cm) | | 1200 | 1600 | 1300 | 850 | 520 | 350 |
| Silicone rubber | | 700 | 850 | 870 | 350 | 130 | 200 |
| | 990 | | | | | | |
| Tack | | 32 | 32 | 32 | 32 | 32 | 32 |
| | 32 | | | | | | |
| Peeling resistance (gf/2.5 cm) | | 200 | 170 | 120 | 420 | 410 | 250 |
| | 110 | | | | | | |
| Adhesion after peeling test (gf/2.5 cm) Stainless steel sheet | | 1050 | 1500 | 1250 | 700 | 550 | 300 |
| | 1900 | | | | | | |

The silicone-type pressure-sensitive adhesive of this invention is cured by an addition reaction, and it can adhere well on silicone rubber. Also, the organopolysiloxane for the silicone-type pressure-sensitive adhesive of this invention can be used to prepare the silicone-type pressure-sensitive adhesive.

## Claims

1. An organopolysiloxane for silicone pressure sensitive adhesives, wherein said organopolysiloxane comprises: the reaction product of (a) and (b), wherein (a) is a plurality of diorganopolysiloxane molecules having molecular chain terminals, wherein 10-80 mole percent of said terminals are alkenyl groups, and the remaining molecular chain terminals are hydroxyl groups bonded to silicone atoms, and (b) a hydroxylated organopolysiloxane, which contains at least one or more hydroxyl group or alkoxy group bonded with silicon atoms on average in each molecule, and which comprises units having the formula:
(R¹ ₃SiO_{1/2})ₓ(SiO_{4/2})_{1.0}
where R¹ represents a substituted or unsubstituted monovalent hydrocarbon group, and x is a number from 0.5-1.0, and wherein said reaction between (a) and (b) is promoted by (c), an amine compound which has a boiling point under ambient pressure in the range of -10°C to 200°C.

2. The composition of claim 1, wherein at least one diorganopolysiloxane molecule (a) has methyl, vinyl or phenyl side chains.

3. The composition of claim 1, wherein diorganopolysiloxane molecule (a) has a William plasticity of from 100 to 160.

4. The composition of claim 1, wherein R¹ is selected from the group consisting of methyl, ethyl, propyl, butyl, pentyl, heptyl; vinyl, allyl, butenyl, pentenyl, phenyl, tolyl, xylyl, benzyl, phenethyl, chloromethyl, 3-chloropropyl group, and 3,3,3-trifluoropropyl.

5. The composition of claim 1, wherein said alkoxy group is methoxy, ethoxy, or propoxy group.

6. The composition of claim 1, wherein the ratio of component (a) to component (b) is from 2:8 to 8:2.

7. A silicone presure sensitive adhesive composition comprising:
(A) the organopolysiloxane of claim 1 as a first organopolysiloxane;
(B) a second organopolysiloxane having on average 2 or more hydrogen atoms bonded with silicon atoms, and
(C) a platinum cataylst.

8. The composition of claim 8, wherein (B) is present in an amount such that the molar ratio of hydrogen atom bonded to silicone atoms to the molar ratio of hydrogen atoms or alkoxy groups in component (A) is from 0.7 to 1.

9. The composition of claim 8, wherein component (C) is present in an amount of from 0.1 to 1000 ppm with respect to the amounts of said first and second organopolysiloxanes.

10. Use of the composition of claim 8 as a coating on a substrate.
